# EUROPÄISCHE PATENTSCHRIFT

(11) **EP 2 737 807 B1**
(45) Veröffentlichungstag und Bekanntmachung des Hinweises auf die Patenterteilung: **05.04.2017**
(21) Anmeldenummer: 12194967.1
(22) Anmeldetag: 30.11.2012
(51) Int. Cl.: C07C 233/11, C07C 233/22, A23L 27/20

(54) **Verwendung von stickstoffhaltigen Derivaten der Zimtsäure als Geschmacksstoffe**
Use of nitrogen-containing derivatives of cinnamic acid as flavourants
Utilisation de dérivés d'acide cinnamique contenant de l'azote en tant qu'aromates

(43) Veröffentlichungstag der Anmeldung: 04.06.2014
(73) Patentinhaber: Symrise AG, 37603 Holzminden (DE)
(72) Erfinder: Ley, Jakob, 37603 Holzminden (DE); Backes, Michael, 37603 Holzminden (DE); Paetz, Susanne, 37671 Höxter (DE); Reichelt, Katharina, 37603 Holzminden (DE)
(74) Vertreter: Eisenführ Speiser

(56) Entgegenhaltungen:
- EP-A1- 2 529 632
- EP-A2- 1 323 356
- WO-A1-2013/000673
- US-A1- 2005 197 511
- NOBUJI NAKATANI ET AL: "Chemical constituents of peppers (piper spp.) and application to food preservation: Naturally occuring antioxidative compounds", ENVIRONMENTAL HEALTH PERSPECTIVES, U.S. DEPARTMENT OF HEALTH AND HUMAN SERVICES, NATIONAL INSTITUTE OF ENVIRONMENTAL HEALTH SCIENCES, US, Bd. 67, 1. Januar 1986 (1986-01-01), Seiten 135-142, XP000925839, ISSN: 0091-6765
- DWIVEDI ET AL: "Synthesis and antihyperglycemic activity of novel N-acyl-2-arylethylamines and N-acyl-3-coumarylamines", BIOORGANIC & MEDICINAL CHEMISTRY LETTERS, PERGAMON, ELSEVIER SCIENCE, GB, Bd. 18, Nr. 7, 6. März 2008 (2008-03-06), Seiten 2301-2305, XP022574950, ISSN: 0960-894X, DOI: 10.1016/J.BMCL.2008.03.003
- MICHALET ET AL: "N-Caffeoylphenalkylamide derivatives as bacterial efflux pump inhibitors", BIOORGANIC & MEDICINAL CHEMISTRY LETTERS, PERGAMON, ELSEVIER SCIENCE, GB, Bd. 17, Nr. 6, 20. Februar 2007 (2007-02-20), Seiten 1755-1758, XP005895405, ISSN: 0960-894X, DOI: 10.1016/J.BMCL.2006.12.059

## Beschreibung

### Gebiet der Erfindung

Die Erfindung befindet sich auf dem Gebiet der Geschmacksstoffe und betrifft die Verwendung von speziellen Zimtsäureamiden als Geschmacksstoffe sowie Aromamischungen und Zubereitungen zur oralen Aufnahme, die diese Amide enthalten.

### Stand der Technik

Es besteht ein ständiger Bedarf, neue Geschmacksstoffe, d.h. geschmacksaktive Verbindungen bzw. Verbindungen, die einen Geschmackseindruck vermitteln, modifizieren und/oder verstärken können, aufzufinden. Insbesondere besteht Bedarf an solchen Verbindungen, die den Geschmackseindruck Umami und/oder Kokumi vermitteln bzw. auf den Geschmacksknospen erzeugen, modifizieren und/oder verstärken können. Im Zuge des verstärkten Gesundheitsbewusstseins der Konsumenten werden zudem Verbindungen gesucht, die einen salzigen Geschmackseindruck vermitteln, modifizieren und/oder verstärken können. Insgesamt besteht demnach ein besonderer Bedarf an würzigen Geschmacksstoffen, die sämtliche der Geschmackseindrücke Umami, Kokumi und salzig vermitteln, modifizieren und/oder verstärken können. Besonders bevorzugt sind im allgemeinen Geschmacksstoffe, die in natürlichen, frischen, getrockneten oder gegebenenfalls mit für Lebensmittel üblichen Zubereitungsarten (z.B. Evaporation oder Pervaporation, Extraktion, Dämpfen, Erhitzen, Rösten, Kochen, Braten, Kühlen, Mahlen, Enzym-Behandlung, Fermentieren) behandelten Quellen tierischen, pflanzlichen, pilzlichen oder mikrobiellen Ursprungs gefunden und im Idealfall aus diesen isoliert werden können ("natürlich vorkommende" Stoffe).

Unter einem würzigen Geschmackseindruck versteht man insbesondere den als Umami bezeichneten Geschmack der Aminosäuren Glutaminsäure und Asparaginsäure und der Nucleotide Adenosin-5'-monophosphat, Cytidin-5'-monophosphat, Inosin-5'-monophosphat, Guanosin-5'-monophosphat, insbesondere in der Form ihrer Mononatriumsalze, insbesondere auch in Mischungen der vorgenannten Stoffe, wobei der Umami-Geschmack auch durch weitere, hier nicht aufgeführte Verbindungen verursacht werden kann. Der Geschmackseindruck Umami wird häufig mit den Begriffen "Brühe-artig", "fleischig", "mundfüllend" und "würzig" umschrieben und häufig im Zusammenhang mit dem Geschmackseindruck Kokumi gesehen. Zudem trägt der Umami-Geschmackseindruck häufig im Rahmen der Gesamtgeschmackswahrnehmung zur Salzigkeit bei, obwohl Salzigkeit insbesondere durch Natriumionen, vor allem in Form von Natriumchlorid, hervorgerufen wird. Die vorstehend genannten Aminosäuren und Nucleotide bzw. Salze haben den Nachteil, dass eine relativ hohe Konzentration dieser Stoffe eingesetzt werden muss, um einen zufriedenstellenden Umami- bzw. Kokumi-Geschmackseindruck zu vermitteln. So muss beispielsweise Natriumglutamat regelmäßig in einer Konzentration von 0,02 bis 0,5 Gew.-%, bezogen auf das Gesamtgewicht des Lebensmittels, vorhanden sein, um den gewünschten Geschmackseindruck zu erzeugen. Die vorstehend genannten Nucleotide sind zudem für sich alleine jeweils nur schwach wirksam und können daher häufig nur mit Natriumglutamat zusammen einen zufriedenstellenden Umami-Geschmackseindruck vermitteln.

Erst in den letzten Jahren sind einige nicht natürlich vorkommende Verbindungen mit einer wesentlich potenteren Umami-ähnlichen Wirkung beschrieben worden, z. B. in den Schriften EP 1989944 A1**,** WO 2008 046895 A1**,** EP 2168442 A2 (alle Symrise), US 2004 0202760 A1**,** US 2006 057268 **und** US 2007 0134389 (alle IFF). Diese Verbindungen besitzen angeblich häufig eine 10- bis 10000-fach stärkere Geschmacksstoffwirkung als Mononatriumglutamat.

Durch molekularbiologische Methoden ist es außerdem gelungen, den wesentlichen Rezeptor des Menschen, der für den Glutamat- und Umami-Geschmack zuständig ist, zu identifizieren. Basierend auf diesen Erkenntnissen wurden in WO 2003 004992 A2 (NIH) und WO 2003 001876 A2 (Senomyx) Messmethoden vorgeschlagen, um neue möglicherweise sensorisch wirksame Umami-Geschmacksstoffe zu identifizieren. So werden in der Veröffentlichung US 2005 084506 A (Senomyx) einige potentielle Aktivatoren des Umami-Rezeptors in Form nicht natürlich vorkommender Amide beschrieben. Aus den genannten Schriften sind beispielsweise einige nicht natürlich vorkommende Zimtamide aromatischer Amine beschrieben, die angeblich den fremdexprimierten humanen, potentiellen Umami-Rezeptor aktivieren können.

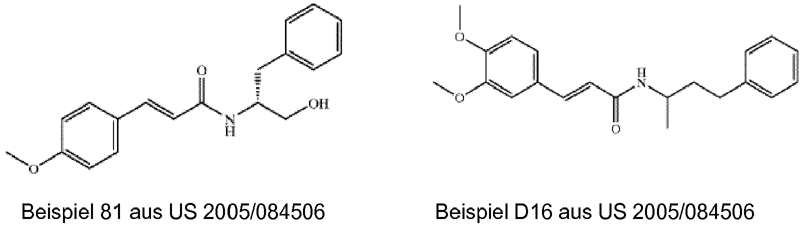

Die vorstehend genannten Verbindungen sind nicht natürlich vorkommende Verbindungen. Generell - wie auch im Rahmen der vorliegenden Erfindung - sind jedoch natürlich vorkommende Verbindungen gegenüber synthetischen bzw. nicht-natürlich vorkommenden Verbindungen bevorzugt. Natürlich vorkommende, einen potenten Umami-Geschmackseindruck vermittelnde oder verstärkende Amide vorstehend genannter Strukturtypen wurden im Stand der Technik bisher jedoch nicht beschrieben.

In der Veröffentlichung EP 1323356 A2 (Symrise) wird zwar die Verwendung bestimmter natürlich vorkommender Zimtsäureamide aromatischer Amine als Aromastoffe beschrieben, jedoch offenbart diese Schrift diesbezüglich lediglich, dass diese Verbindungen (in den darin beschriebenen Konzentrationen) als scharf oder wärmend empfunden werden, das heißt einen bestimmten chemesthetischen Reiz vermitteln. Etwaige durch die in diesem Dokument beschriebenen Verbindungen vermittelte (primäre) Geschmackseindrücke sind darin jedoch nicht beschrieben.

Im Ergebnis bestand die primäre Aufgabe der vorliegenden Erfindung darin, neue Verwendungen an sich bekannter Verbindungen als Geschmacksstoffe zum Vermitteln, Modifizieren und/oder Verstärken von mindestens einem der Geschmackseindrücke Umami, Kokumi und salzig bereitzustellen. Besonders bevorzugt waren Verwendungen anzugeben, wobei Verbindungen eingesetzt werden, die eine wenigstens 10-fach stärkere Geschmacksstoffwirkung als Natriumglutamat besitzen und dabei einen besonders sauberen Geschmackseindruck vermitteln, d.h. einen Geschmackseindruck, der nicht durch weitere Geschmacksrichtungen verfälscht oder beeinflusst wird. Des Weiteren galt es, neue der Ernährung oder dem Genuss dienende (gebrauchs- oder verzehrfertige) Zubereitungen und Halbfertigwaren zur Herstellung davon bereitzustellen. Natriumglutamat, Salz- und Zucker-reduzierte oder -freie Zubereitungen sind dabei besonders bevorzugt.

### Beschreibung der Erfindung

Gegenstand der Erfindung ist die Verwendung einer Kombination (a1) eines Stoffes der Formel (I) 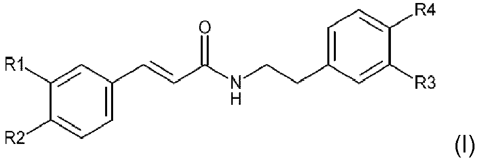 bei dem R¹, R² und R⁴ für eine Methoxygruppe und R³ für Wasserstoff steht, mit (b1) Rubemamin oder (b2) Rubescenamin oder deren Mischung, wobei das Einsatzverhältnis der Stoffe a1:(b1+b2) etwa 10:90 bis etwa 90:10, vorzugsweise etwa 25:75 bis etwa 75:25 und insbesondere etwa 40:60 bis etwa 60:40 betragen kann, als Geschmacksstoffe.

Überraschenderweise wurde gefunden, dass die oben geschilderte umfangreiche Aufgabe durch diese Kombination voll umfänglich gelöst wird.

Insbesondere in Anbetracht der einleitend bereits erwähnten Veröffentlichung EP 1323356 A2 war es überraschend, dass die hierin beschriebenen Verbindungen der Formel (I) bei höheren Konzentrationen nur noch einen unterschwelligen chemesthetischen Reiz vermitteln bzw. erzeugen, dafür jedoch insbesondere in stark Natriumglutamat-reduzierten, in Natriumglutamat-freien Lebensmitteln sowie in Lebensmitteln mit reduziertem Natriumchloridgehalt (zum Beispiel in würzigen Lebensmitteln wie Tomatensuppe, Hühnersuppe, Knabbergebäck, Fertigpizza, Kartoffelchips und Popcorn) sowohl im Anfangsgeschmack (Impact) als auch in der länger anhaltenden Geschmackswahrnehmung insbesondere einen Umami-Geschmackseindruck vermitteln, modifizieren und/oder verstärken können. Die Stoffe ermöglichen insbesondere die Einstellung eines als besonders angenehm empfundenes Geschmackserlebnisses, welches in vielen Fällen sogar als gegenüber Natriumglutamat bevorzugt bewertet wird, weil es frei von weiteren unterschwelligen anderen Geschmacksnoten ist.

### Zimtsäureamid-Derivate

Die hierin beschriebenen Zimtsäureamid-Derivate stellen Abwandlungen bekannter Stoffe dar, die nach den einschlägigen Methoden der organischen Chemie erhältlich sind. Eine Übersicht verschiedener Zimtsäureamide aromatischer Amine ist z. B. in Kapitel 3 des Übersichtsartikels von Bassard, et al. in Phytochemistry 2010, 71, (16), 1808-1824 zu finden. In Tabelle A sind eine Reihe von prominenten Beispielen wiedergegeben, die zwar nicht erfindungsgemäß sind, aber eine strukturelle Ähnlichkeit aufweisen.

**Tabelle A**

| Bekannte Zimtsäureamide des Stands der Technik und deren Rohstoffquellen | | | |
|---|---|---|---|
| **Verbindung** | **Struktur** | **Quelle** | **Veröffentlichung** |
| Rubemamin | 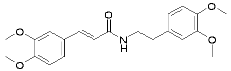 | *Zanthoxylum rubescens* (Spuren) | S.K. Adesina und J. Reisch, Phytochemistry 1989, 28 (3), 839-842 |
| | | *Chenopodiu m album (5-*10 mg/kg) | Cutillo, F.; D'Abrosca, B.; DellaGreca, M.; Di Marino, C.; Golino, A.; Previtera, L.; Zarrelli, A. Phytochemistry 2003, 64, 1381-1387 |
| Rubemamid | 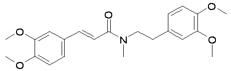 | *Zanthoxylum rubescens* | S.K. Adesina und J. Reisch, Phytochemistry 1989, 28 (3), 839-842 |
| Rubescenamin | 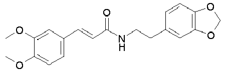 | *Zanthoxylum rubescens* | S.K. Adesina, Planta Medica 1989, 55 (3), 324-326 |
| Rubescenamid | 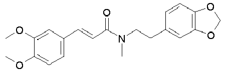 | *Zanthoxylum rubescens* | S.K. Adesina, Planta Medica 1989, 55 (3), 324-326 |
| Zanthosin | 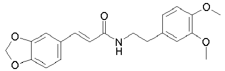 | *Zanthoxylum rubescens* | S.K. Adesina, Planta Medica 1989, 55 (3), 324-326 |
| Zanthosinamid | 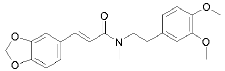 | *Zanthoxylum rubescens* | S.K. Adesina, O.A. Olatunji, D. Bergenthal und J. Reisch, Pharmazie 1988, 43 (7), 517-518 |
| Dioxamid | 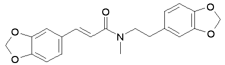 | *Zanthoxylum rubescens* | S.K. Adesina und J. Reisch, Phytochemistry 1989, 28 (3), 839-842 |
| Dioxamin | 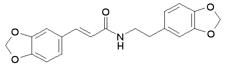 | *Zanthoxylum rubescens* | S.K. Adesina und J. Reisch, Phytochemistry 1989, 28 (3), 839-842 |
| Zanthomamin | 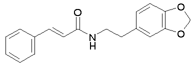 | *Zanthoxylum rubescens* | S.K. Adesina und J. Reisch, Phytochemistry 1989, 28 (3), 839-842 |
| Zanthomamid | 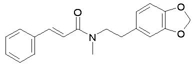 | *Zanthoxylum rubescens* | S.K. Adesina und J. Reisch, Phytochemistry 1989, 28 (3), 839-842 |

Die Zimtsäureamid-Derivate lassen sich analog zu den oben genannten Stoffen herstellen.

Unter den hier offenbarten Verbindungen haben sich solche als besonders vorteilhaft erwiesen, bei denen in Formel (I) mindestens eine der Gruppen R¹, R², R³ und R⁴ in Formel (I) für Wasserstoff steht, insbesondere Verbindungen, bei denen in Formel (I) R¹, R² und R⁴ für eine Methoxygruppe und R³ für Wasserstoff steht. Diese Stoffe zeichnen sich durch einen besonders neutralen Geschmackseindruck aus, d.h. es fehlen sämtliche weiteren Geschmacksempfindungen, die den gewünschten Geschmackseindruck, nämlich Umami, Kokumi und/oder salzig, verfälschen könnten.

Die hier offenbarten Zimtsäureamid-Derivate können mit Rubemamin und deren Derivaten abgemischt werden. Im Sinne der vorliegenden Offenlegungsschrift werden daher Mischungen der Stoffe der Formel (I), insbesondere der oben definierten Ausführungsformen, mit jedem der Stoffe offenbart, die ausgewählt sind aus der Gruppe, die gebildet wird von Rubemamin, Rubemamid, Rebuscenamin, Rubescenamid, Zanthosin, Zanthosinamid, Dioxamid, Dioxamin, Zanthomamin und Zanthomamid sowie deren Gemischen.

### Aromamischungen

Ein weiterer Gegenstand der vorliegenden Erfindung betrifft Aromazubereitungen, enthaltend
(a) eine Kombination (a1) eines Stoffes der Formel (I), bei dem R¹, R² und R⁴ für eine Methoxygruppe und R³ für Wasserstoff steht, mit (b1) Rubemamin oder (b2) Rubescenamin oder deren Mischung, wobei das Einsatzverhältnis der Stoffe a1:(b1+b2) etwa 10:90 bis etwa 90:10, vorzugsweise etwa 25:75 bis etwa 75:25 und insbesondere etwa 40:60 bis etwa 60:40 betragen kann,
   und
(b) mindestens einen weiteren Geschmacksstoff.

Die Geschmacksstoffe, die die Komponente (b) bilden und damit selbstverständlich von der Komponente (a) verschieden sind, sind vorzugsweise so ausgewählt, dass auch sie für sich genommen mindestens einen der Geschmackseindrücke Umami, Kokumi oder salzig vermitteln und insbesondere in der Lage sind, unangenehme Geschmackseindrücke wie bitter, metallisch, kalkig, sauer oder adstringierend zu maskieren bzw. angenehme Geschmackseindrücke (z.B. süß) zu verstärken.

Geschmacksstoffe, die die Gruppe (b) bilden, sind beispielsweise ausgewählt aus der Gruppe bestehend aus Mononatriumglutamat, freie Glutaminsäure, Nucleotide oder deren pharmazeutisch akzeptable Salze, Strombine, Theogalline, Pyridin-Betain-Verbindungen, Glutaminsäureglycoside, Äpfelsäureglycoside, Glutathion-Derivate, Lactisole und Alkylpyridine (vorzugsweise Alkylpyridine wie in WO 2009 122318 A1 und WO 2009 1223319 A1 beschrieben), insbesondere 2-Hexyl-, 2-Heptyl und 2-Octylpyridin, (2E,6Z)-N-cyclopropylnona-2,6-dienamid, (2E,6Z)-N-ethylnona-2,6-dienamid, N-[(2E)-3,7-dimethylocta-2,6-dienyl]cyclopro-pancarboxamid, N'-[(2-methoxy-4-methyl-phenyl)methyl]-N-[2-(5-methyl-2-pyridyl)ethyl]-oxa-mid, N'-[(2,4-dimethoxyphenyl)methyl]-N-[2-(2-pyridyl)ethyl]oxamid, N'-[(2-methoxy-4-methyl-phenyl)methyl]-N-[2-(2-pyridyl)ethyl]oxamid, N-(1-propylbutyl)-1,3-benzodioxole-5-carb-oxamid, 1-(2-hydroxy-4-isobutoxy-phenyl)-3-(2-pyridyl)propan-1-on und 1-(2-hydroxy-4-methoxy-phenyl)-3-(2-pyridyl)propan-1-on.

Generell ist der bzw. sind zwei, drei, mehrere oder sämtliche der weiteren Geschmacksstoffe zum Vermitteln, Modifizieren und/oder Verstärken einer, zwei oder sämtlicher der Geschmackseindrücke Umami, Kokumi und salzig vorzugsweise natürlich vorkommende Verbindungen, besonders bevorzugt Verbindungen ausgewählt aus der Gruppe bestehend aus: Mononatriumglutamat, freie Glutaminsäure, Nucleotide (z.B. Adenosin-5'-monophosphat, Cytidin-5'-monophosphat, Inosin-5'-monophosphat, Guanosin-5'-monophosphat), oder deren pharmazeutisch akzeptable Salze, Strombine wie in WO 2010 100589 A1 beschrieben, Theogalline wie in JP 2007 110988 A beschrieben, Pyridin-Betain-Verbindungen wie in EP 1291342 B1 beschrieben, Glutaminsäureglycoside wie in WO 2002 087361 A1 beschrieben, Äpfelsäureglycoside wie in WO 2006 003107 A1 beschrieben, Glutathion-Derivate wie in EP 0181421 oder WO 2007 042273 A1 beschrieben, Lactisole, Hydroxyflavanone (z.B. Eriodictyol, Homoeriodictyol oder deren Natriumsalze), insbesondere gemäß EP 1258200 B1, Hesperitin nach EP 1909599 A1, Phloretin nach EP 1972203 B1 oder EP 1998636 B1, Hydroxyflavane nach US 2010 292175 AA, 4-Hydroxychalcone nach EP 1972203 B1, Extrakte auf Basis von Hydrangea dulcis gemäß EP 2298084 A2, oder Rubus ssp.; Gemische von Molkeproteinen mit Lecithinen, Hefeextrakte, Pflanzenhydrolysate, pulverisierte Gemüse (z.B. Zwiebelpulver, Tomatenpulver), Pflanzenextrakte (z.B. von Liebstöckel oder von Pilzen wie Shiitake), Meeralgen und Mineralsalzmischungen, insbesondere Mineralsalzmischungen nach US 2009 214728 AA.

Synthetische vorzugsweise mit hierin beschriebenen Verbindungen der Formel (I) bzw. Mischungen davon zu kombinierende Geschmacksstoffe zum Vermitteln, Modifizieren und/oder Verstärken einer, zwei oder sämtlicher der Geschmackseindrücke Umami, Kokumi und salzig sind vorzugsweise ausgewählt aus den chemischen Strukturen, die in den Veröffentlichungen US 2004 0202619 AA, US 2004 0202760 AA, US 2006 0057268 AA und US 2006 0068071 AA beschrieben sind, insbesondere (2E, 6Z)-N-cyclopropylnona-2,6-dienamid (FEMA 4087; Flavis 16.093), 2E,6Z)-N-ethylnona-2,6-dienamid (FEMA 4113; Flavis 16.094) und N-[(2E)-3,7-dimethylocta-2,6-dienyl]cyclopropancarboxamid (FEMA 4267; Flavis 16.095), den chemischen Strukturen wie in US2005 0084506 beschrieben, insbesondere N'-[(2-methoxy-4-methyl-phenyl)methyl]-N-[2-(5-methyl-2-pyridyl)ethyl]oxamid (FEMA 4234; Flavis 16.190), N'-[(2,4-dimethoxyphenyl)methyl]-N-[2-(2-pyridyl)ethyl]oxamid (FEMA 4233; Flavis 16.099), N'-[(2-methoxy-4-methyl-phenyl)methyl]-N-[2-(2-pyridyl)ethyl]oxamid (FEMA 4231; Flavis 16.101), N-(1-propylbutyl)-1,3-benzodioxole-5-carboxamid (FEMA 4232; Flavis 16.098), und den chemischen Strukturen wie in WO 2011 004016 A2 beschrieben, insbesondere 1-(2-hydroxy-4-isobutoxy-phenyl)-3-(2-pyridyl)propan-1-on (FEMA 4722) und 1-(2-hydroxy-4-methoxy-phenyl)-3-(2-pyridyl)propan-1-on (FEMA 4723).

In einer bevorzugten Ausgestaltung der vorliegenden Erfindung können die Aromamischungen als Komponente (b) auch einen oder mehrere süßverstärkende Stoffe enthalten, wie beispielsweise eine oder mehrere Verbindungen gemäß WO 2007014879 A1, WO 2007 107596 A1, US 2010 292175 AA und EP 1955601 B1, insbesondere Hesperetin, 3,7'-Dihydroxy-4'-methoxyflavan und/oder Phloretin. Hierdurch wird vorteilhafterweise eine Verstärkung und eine Vertiefung sowie Abrundung des Geschmacksprofils erzielt, insbesondere in erfindungsgemäßen Zubereitungen und Halbfertigwaren mit würzigem und/oder salzigem Geschmack. Die Aromamischungen werden in diesen Fällen vorzugsweise so eingesetzt, dass der Gesamtanteil an Hesperetin, 3,7'-Dihydroxy-4'-methoxyflavan und/oder Phloretin in solchen Zusammensetzungen oder Zubereitungen jeweils im Bereich von 1 bis 400 ppm, bevorzugt im Bereich von 5 bis 200 ppm, bezogen auf das Gesamtgewicht der Zubereitung bzw. Halbfertigware liegt.

Grundsätzlich können die erfindungsgemäßen Aromazubereitungen die Verbindungen der Formel (I) bezogen auf das Gesamtgewicht in Mengen von etwa 0,0001 bis etwa 95, vorzugsweise etwa 0,1 bis etwa 80, und besonders bevorzugt von etwa 1 bis 50 Gew.-% enthalten.

### Zubereitungen zur oralen Aufnahme

Ein weiterer Gegenstand der vorliegenden Erfindung umfasst Zubereitungen zur oralen Aufnahme, enthaltend
(a) eine Kombination (a1) eines Stoffes der Formel (I), bei dem R¹, R² und R⁴ für eine Methoxygruppe und R³ für Wasserstoff steht, mit (b1) Rubemamin oder (b2) Rubescenamin oder deren Mischung, wobei das Einsatzverhältnis der Stoffe a1:(b1+b2) etwa 10:90 bis etwa 90:10, vorzugsweise etwa 25:75 bis etwa 75:25 und insbesondere etwa 40:60 bis etwa 60:40 betragen kann,
   und
(b) mindestens einen weiteren zum Verzehr geeigneten Bestandteil ausgewählt aus der Gruppe die gebildet wird Trägerstoffen, Aromastoffen, Fetten und Ölen, Emulgatoren und Antioxidantien.

Die erfindungsgemäßen oralen Zubereitungen stellen gebrauchs- oder verzehrfertige (der Ernährung oder dem Genuss dienende) Zubereitungen dar. Dabei handelt es sind regelmäßig um Produkte, die dazu bestimmt sind, in die menschliche Mundhöhle eingebracht zu werden, dort eine bestimmte Zeit zu verbleiben und anschließend entweder verzehrt (z.B. verzehrfertige Lebensmittel, siehe auch weiter unten) oder wieder aus der Mundhöhle entfernt zu werden (z.B. Kaugummis). Zu diesen Produkten gehören dabei sämtliche Stoffe oder Erzeugnisse, die dazu bestimmt sind, in verarbeitetem, teilweise verarbeitetem oder unverarbeitetem Zustand vom Menschen aufgenommen zu werden. Hierzu zählen auch Stoffe, die Lebensmitteln bei ihrer Herstellung, Verarbeitung oder Bearbeitung zugesetzt werden und dazu vorgesehen sind, in die menschliche Mundhöhle eingebracht zu werden.

### Nahrungsmittel

Im Rahmen des vorliegenden Textes werden unter einem "Nahrungs- oder Lebensmittel" insbesondere Stoffe verstanden, die dazu bestimmt sind, in unverändertem, zubereitetem oder verarbeitetem Zustand vom Menschen geschluckt und dann verdaut zu werden; als Lebensmittel werden insoweit auch Umhüllungen, Überzüge oder sonstige Umschließungen verstanden, die dazu bestimmt sind, mitverschluckt zu werden, oder bei denen ein Verschlucken vorauszusehen ist. Auch bestimmte Produkte, die üblicherweise wieder aus der Mundhöhle entfernt werden (z.B. Kaugummis) sind im Rahmen des vorliegenden Textes als Lebensmittel zu verstehen, da bei ihnen nicht auszuschließen ist, dass sie zumindest teilweise geschluckt werden.

Unter einem verzehrfertigen Lebensmittel ist hierbei ein Lebensmittel zu verstehen, das hinsichtlich der für den Geschmack maßgeblichen Substanzen bereits vollständig zusammengesetzt ist. Unter den Begriff "verzehrfertiges Lebensmittel" fallen auch Getränke sowie feste oder halbfeste verzehrfertige Lebensmittel. Als Beispiele seien genannt Tiefkühlprodukte, die vor dem Verzehr aufgetaut und auf Verzehrtemperatur erwärmt werden müssen. Auch Produkte wie Joghurt oder Eiscreme aber auch Kaugummis oder Hartkaramellen zählen zu den verzehrfertigen Lebensmitteln.

### Halbfertigwaren

Der Begriff der oralen Zubereitung umfasst im Sinne der Erfindung auch Halbfertigwaren zur Herstellung einer der Ernährung oder dem Genuss dienenden Zubereitung. Unter einer Halbfertigware ist im Zusammenhang mit der vorliegenden Erfindung ein Produkt zu verstehen, welches aufgrund eines sehr hohen Gehaltes an Aroma- und Geschmacksstoffen für die Verwendung als verzehrfertiges Lebensmittel ungeeignet ist. Erst durch Mischen mit mindestens einem weiteren Bestandteil (d.h. durch Verringern der Konzentration der betreffenden Aroma- und Geschmacksstoffe) und gegebenenfalls weitere Prozessschritte (z.B. Erwärmen, Gefrieren) wird die Halbfertigware in ein verzehrfertiges Lebensmittel überführt. Als Beispiel für Halbfertigwaren seien hier Tütensuppen, Backaromen und Puddingpulver genannt.

Die Nahrungsmittel bzw. Halbfertigwaren können die Verbindungen der Formel (I) bezogen auf das Gesamtgewicht im Bereich von 5 ppm bis 100.000 ppm, bevorzugt im Bereich von 10 ppm bis 10.000 ppm, insbesondere im Bereich von 15 ppm bis 500 ppm, enthalten.

### A. Trägerstoffe

Eine Reihe von erfindungsgemäßen Zubereitungen oder Halbfertigwaren (wie oben beschrieben) ist besonders bevorzugt. So sind beispielsweise erfindungsgemäße Zubereitungen oder Halbfertigwaren gemäß einer bevorzugten Ausführungsform sprühgetrocknete Zubereitungen bzw. Halbfertigwaren, die als weitere zum Verzehr geeignete Bestandteile (unter anderem) feste Trägerstoffe umfassen.

Erfindungsgemäß bevorzugt sind erfindungsgemäße Zubereitungen oder Halbfertigwaren, die einen oder mehrere zum Verzehr geeignete feste Trägerstoffe umfassen, wobei, bezogen auf die Trockenmasse der Zubereitung bzw. Halbfertigware, das Gewichtsverhältnis der Gesamtmenge an Verbindungen der Formel (I) zu der Gesamtmenge an zum Verzehr geeigneten festen Trägerstoffen vorzugsweise im Bereich von 1 : 10 bis 1 : 100000, bevorzugt im Bereich von 1 : 50 (vorzugsweise 1 : 100) bis 1 : 20000, besonders bevorzugt im Bereich von 1 : 100 (vorzugsweise 1 : 1000) bis 1 : 5000, liegt.

Weiter bevorzugt ist es, wenn dabei die Gesamtmenge von Verbindungen der Formel (I) und zum Verzehr geeigneten festen Trägerstoffen bezogen auf das Gesamtgewicht der Zubereitung bzw. Halbfertigware im Bereich von 70 bis 100 Gew.-%, bevorzugt im Bereich von 85 bis 100 Gew.-%, liegt.

Vorteilhafte Trägerstoffe sind Siliciumdioxid (Kieselsäure, Kieselgel), Kohlenhydrate und/oder Kohlenhydratpolymere (Polysaccharide), Cyclodextrine, Stärken, abgebaute Stärken (Stärkehydrolysate), chemisch oder physikalisch modifizierte Stärken, modifizierte Cellulosen, Gummi Arabicum, Ghatti-Gummi, Traganth, Karaya, Carrageenan, Guarkernmehl, Johannisbrotkernmehl, Alginate, Pektin, Inulin oder Xanthan Gum. Bevorzugte Stärkehydrolysate sind Maltodextrine und Dextrine.

Erfindungsgemäß besonders bevorzugte Trägerstoffe sind Siliciumdioxid, Gummi Arabicum und Maltodextrine, wobei hier wiederum Maltodextrine mit DE-Werten im Bereich 5 bis 20 besonders bevorzugt sind. Es ist dabei unerheblich, welche Pflanze ursprünglich die Stärke zur Herstellung der Stärkehydrolysate geliefert hat. Besonders geeignet und leicht verfügbar sind jedoch Mais-basierende Stärken sowie Stärken aus Tapioka, Reis, Weizen oder Kartoffeln. Die Trägerstoffe können dabei auch als Fließhilfsmittel fungieren, wie beispielsweise Siliciumdioxid.

Die erfindungsgemäßen Zubereitungen oder Halbfertigwaren, die neben der oder den hierin beschriebenen Verbindungen der Formeln (I) bzw. oben definierten Mischungen noch einen oder mehrere feste Trägerstoffe umfassen, können beispielsweise durch mechanische Mischvorgänge, wobei gleichzeitig auch eine Zerkleinerung der Partikel erfolgen kann, oder mittels Sprühtrocknung hergestellt werden. Besonders bevorzugt sind dementsprechend erfindungsgemäße Zusammensetzungen oder Halbfertigwaren, die feste Trägerstoffe umfassen und mittels Sprühtrocknung hergestellt sind; hinsichtlich der Sprühtrocknung wird verwiesen auf US 3,159,585, US 3,971,852, US 4,532,145 oder US 5,124,162.

Bevorzugte erfindungsgemäße, Trägerstoffe umfassende Zubereitungen und Halbfertigwaren, die mittels Sprühtrocknung hergestellt wurden, besitzen eine mittlere Partikelgröße im Bereich von 30 bis 300 µm und eine Restfeuchte von kleiner oder gleich 5 Gew.-%.

### B. Aromastoffe

Die oralen Zubereitungen können als weitere Bestandteile einen oder mehrere Aromen enthalten. Eine solche Aromakomposition umfasst für die Zwecke der vorliegenden Erfindung mindestens einen flüchtigen Aromastoff (nicht gemeint sind hierbei Verbindungen der Formel (I)). Der wenigstens eine flüchtige Aromastoff ist dabei vorzugsweise eine sensorisch wirksame Komponente mit einem Dampfdruck von größer oder gleich 0,01 Pa bei 25°C, vorzugsweise einem Dampfdruck von größer oder gleich 0,025 Pa bei 25°C. Ein Großteil der flüchtigen Aromastoffe weist einen Dampfdruck von größer oder gleich 1 Pa bei 25°C auf. Diese Aromastoffe werden für die Verwendung in erfindungsgemäßen Zubereitungen, Halbfertigwaren oder Geschmacksstoffmischungen als besonders bevorzugt angesehen.

Geeignete Aromakompositionen enthalten vorzugsweise synthetische, natürliche oder naturidentische Aroma-, Riech- und Geschmacksstoffe, Reaktionsaromen, Raucharomen oder andere aromagebende Zubereitungen (z.B. Protein[teil]hydrolysate, Grillaromen, Pflanzenextrakte, Gewürze, Gewürzzubereitungen, Gemüse und/oder Gemüsezubereitungen) sowie gegebenenfalls geeignete Hilfs- und Trägerstoffe. Insbesondere sind hier solche Aromenkompositionen oder deren Bestandteile geeignet, die einen röstigen, fleischigen (insbesondere Huhn, Fisch, Meerestiere, Rind, Schwein, Lamm, Schaf, Ziege), gemüsigen (insbesondere Tomate, Zwiebel, Knoblauch, Sellerie, Lauch, Pilze, Auberginen, Seetang), einen würzigen (insbesondere schwarzer und weißer Pfeffer, Chili, Paprika, Kardamom, Muskat, Piment, Senf und Senf-Produkte), gebratenen, hefigen, gesottenen, fettigen, salzigen und/oder scharfen Aromaeindruck verursachen und somit den würzigen Eindruck verstärken können. In der Regel enthalten die Aromakompositionen mehr als einen der genannten Inhaltsstoffe.

Modulierende Aroma- und/oder Geschmackstoffe werden vorzugsweise ausgewählt aus der Gruppe bestehend aus Adenosin-5'-monophosphat, Cytidin-5'-monophosphat, Inosin-5'-monophosphat, und deren pharmazeutisch akzeptablen Salzen; Lactisolen; 2,4-Dihydroxybenzoesäure; 3-Hydroxybenzoesäure; Natriumsalzen, vorzugsweise Natriumchlorid, Natriumlactat, Natriumcitrat, Natriumacetat, Natriumgluconoat; Hydroxyflavanonen, wie zum Beispiel Eriodictyol, Homoeriodictyol, und deren Natriumsalzen; Hydroxybenzoesäureamiden, wie zum Beispiel 2,4-Dihydroxybenzoesäurevanillylamid, 2,4-Di-hydroxybenzoesäure-*N*-(4-hydroxy-3-methoxybenzyl)amid, 2,4,6-Trihydroxybenzoesäure-*N*-(4-hydroxy-3-methoxybenzyl)amid, 2-Hydroxy-benzoesäure-*N*-4-(hydroxy-3-methoxy-benzyl)amid, 4-Hydroxybenzoesäure-*N*-(4-hydroxy-3-methoxybenzyl)-amid, 2,4-Dihydroxy-benzoesäure-*N*-(4-hydroxy-3-methoxybenzyl)amid-Mono-natriumsalz, 2,4-Dihydroxy-benzoesäure-*N*-2-(4-hydroxy-3-methoxyphenyl)-ethyl-amid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-N-[2-(4-hydroxy-3-methoxyphenyl)ethyl]amid; 4-Hydroxy-benzoesäurevanillylamid; Hydroxydeoxybenzoinen, wie zum Beispiel 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxyphenyl) ethanon); Hydroxyphenlaalkandionen, wie zum Beispiel Gingerdion-[2], Gingerdion-[3], Gingerdion-[4], Dehydrogingerdion-[2], Dehydrogingerdion-[3], Dehydrogingerdion-[4]); Diacetyltrimeren; γ-Aminobuttersäuren und Divanillinen; Bicyclo[4.1.0]heptan-7-carbonsäureamide; Cyclopropancarbonsäure(3-methyl-cyclohexyl)amide, aromatische *Neo-*Menthylamide; Geranylaminederivate der Oxalsäure sowie Neomenthylderivate.

Die Aromakompositionen können auch in Form von Reaktionsaromen (Maillard-Produkte) und/oder Extrakten bzw. ätherischen Ölen von Pflanzen oder Pflanzenteilen bzw. Fraktionen davon eingesetzt werden.

### C. Fette und Öle

Gemäß einer weiteren bevorzugten Ausgestaltung der vorliegenden Erfindung können die oralen Zubereitungen Fette und Öle enthalten und dann als Wasser-in-Öl (W/O)-Emulsion vorliegen.

Neben der oder den hierin beschriebenen Verbindungen der Formel (I) umfasst eine solche Emulsion Wasser, eine Ölphase, ein oder mehrere (verzehrbare) W/O-Emulgatoren, gegebenenfalls ein oder mehrere Antioxidantien und gegebenenfalls ein oder mehrere Stoffe zur Verstärkung einer antioxidativen Wirkung.

Die Ölphase einer solchen erfindungsgemäßen W/O-Emulsion besteht aus oder umfasst vorzugsweise ein fettes Öl und/oder eine Aromakomposition (vorzugsweise eine wie oben beschriebene Aromakomposition).

Als fette Öle eignen sich beispielsweise Speiseöle, insbesondere Pflanzenöle. Geeignete fette Öle sind beispielsweise Borretschöl, Distelöl, Erdnussöl, Haselnussöl, Kokosöl, Kürbiskernöl, Leinöl, Maiskeimöl, Makadamianussöl, Mandelöl, Olivenöl, Palmkernöl, Pekannussöl, Pistazienkernöl, Rapsöl, Reiskeimöl, Sesamöl, Sojaöl, Sonnenblumenöl, Walnussöl oder Weizenkeimöl, oder daraus erhältliche Fraktionen. Es können auch flüssige Neutralester basierend auf mittelkettigen Fettsäuren und Glycerin verwendet werden, wie beispielsweise Miglyole (z.B. Miglyol 810, Miglyol 812). Bevorzugt sind Sonnenblumenöl, Palmkernöl und Rapsöl. Ferner bevorzugt werden fraktionierte Kokosöle verwendet, die hauptsächlich Fettsäurereste mit 6 bis 8 C-Atomen aufweisen. Diese zeichnen sich durch ihre Geschmacksneutralität sowie durch ihre gute Oxidationsstabilität aus.

Die erfindungsgemäßen W/O-Emulsionen eignen sich besonders zum Aufbringen auf Lebensmitteloberflächen, wobei die Lebensmittel vorzugsweise einen Wassergehalt von höchstens 10 Gew.-%, bevorzugt von höchstens 5 Gew.-% aufweisen. In einer bevorzugten Ausführungsform weist die erfindungsgemäße W/O-Emulsion bei Aufbringungstemperatur eine ausreichend niedrige Viskosität auf, so dass ein Aufbringen der W/O-Emulsion mittels Sprühen möglich ist. Bevorzugte Lebensmittel, auf deren Oberflächen eine erfindungsgemäße W/O-Emulsion aufgebracht werden kann sind beispielsweise Cracker, Chips (z.B. auf Basis von Kartoffeln, Mais, Getreide oder Brot), extrudierte Knabberartikel (Snacks, z.B. Flips) oder Laugengebäck (z.B. Salzstangen). Erfindungsgemäße W/O-Emulsionen werden regelmäßig in einer Menge von 0,5 bis 6 Gew.-% auf die Lebensmitteloberflächen aufgebracht, bezogen auf das Gesamtgewicht des Lebensmittels.

### D. W/O-Emulgatoren

Zur Stabilisierung der Fett- bzw. Öl/Wassergemische werden für Lebensmittel zugelassene W/O-Emulgatoren benötigt. Vorzugsweise wird der verzehrbare W/O-Emulgator gewählt aus der Gruppe bestehend aus Lecithin (E 322), Mono- und Diglyceride von Speisefettsäuren (E 471), Essigsäuremonoglyceride (E 472a), Milchsäuremonoglyceride (E 472b), Citronensäuremonoglyceride (E 472c), Weinsäuremonoglyceride (E 472d), Diacetylweinsäuremonoglyceride (E 472e), Sorbitanmonostearat (E 491).

### E. Antioxidantien

Die Zubereitungen können des Weiteren auch Antioxidantien enthalten. Geeignete Antioxidantien und Stoffe, welche die antioxidative Wirkung verstärken können sind insbesondere die natürlich vorkommenden Tocopherole und deren Derivate, Tocotrienole, Flavonoide, Ascorbinsäure und ihre Salze, alpha-Hydroxysäuren (z.B. Citronensäure, Milchsäure, Äpfelsäure, Weinsäure) und deren Na-, K- und Ca-Salze, aus Pflanzen isolierte Inhaltsstoffe, Extrakte bzw. Fraktionen davon, z.B. aus Tee, Grüntee, Algen, Traubenkernen, Weizenkeimen, Rosmarin, Oregano, Flavonoide, Quercetin, phenolische Benzylamine. Weiterhin sind als Antioxidantien Propylgallat, Octylgallat, Dodecylgallat, Butylhydroxyanisol (BHA), Butylhydroxytoluol (BHT), Lecithine, Mono- und Diglyceride von Speisefettsäuren verestert mit Citronensäure, Orthophosphate und Na-, K- und Ca-Salze der Monophosphorsäure und Ascorbylpalmitat geeignet.

### F. Weitere Hilfs- und Zusatzstoffe

Weitere Bestandteile einer erfindungsgemäßen, der Ernährung oder dem Genuss dienenden verzehrfertigen Zubereitung oder einer erfindungsgemäßen Halbfertigware können übliche Grund-, Hilfs- und Zusatzstoffe für Nahrungs- oder Genussmittel sein, z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Kräuter, Nüsse, Gemüsesäfte oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose, Tagatose), Zuckeralkohole (z.B. Sorbit, Erythritol), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. γ-Aminobuttersäure, Taurin), Peptide (z.B. Glutathion), native oder prozessierte Proteine (z.B. Gelatine), Enzyme (z.B. Peptidasen), Nucleinsäuren, Nucleotide, Geschmackskorrigenzien für unangenehme Geschmackseindrücke, weitere Geschmacksmodulatoren für weitere, in der Regel nicht unangenehme Geschmackseindrücke, andere geschmacksmodulierende Stoffe (s. hierzu auch oben; z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole, Gummi arabicum), Stabilisatoren (z.B. Carrageenan, Alginat), Konservierungsstoffe (z.B. Benzoesäure und deren Salze, Sorbinsäure und deren Salze), Antioxidantien (z.B. Tocopherol, Ascorbinsäure), Chelatoren (z.B. Citronensäure), organische oder anorganische Säuerungsmittel (z.B. Essigsäure, Phosphorsäure), zusätzliche Bitterstoffe (z.B. Chinin, Coffein, Limonin, Amarogentin, Humolone, Lupolone, Catechine, Tannine), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, trigeminal wirksame Stoffe oder Pflanzenextrakte, enthaltend solche trigeminal wirksamen Stoffe, synthetische, natürliche oder naturidentische Aromastoffe oder Riechstoffe sowie Geruchskorrigenzien.

Bevorzugt enthalten erfindungsgemäße Zubereitungen oder Halbfertigwaren zudem eine Aromakomposition (wie oben beschrieben), um den Geschmack und/oder den Geruch abzurunden und zu verfeinern.

### G. Natriumglutamat, Zucker und Salz

Besonders bevorzugt werden die erfindungsgemäß zu verwendenden Kombinationen sowie die daraus erhältlichen Aromazubereitungen in solchen Nahrungsmitteln oder Halbfertigwaren eingesetzt, die zum einen
(a) entweder einen reduzierten Gehalt an Natriumglutamat aufweisen oder völlig frei davon sind, und zum anderen
(b) einen reduzierten Gehalt an Zucker und/oder Salz aufweisen.

Dementsprechend sind erfindungsgemäße Natriumglutamat-freie Zubereitungen bzw. Halbfertigwaren oder Natriumglutamat-reduzierte sowie Zucker- und/oder Salz-reduzierte Zubereitungen bzw. Halbfertigwaren besonders bevorzugt.

Der Begriff "Natriumglutamat-reduziert" bedeutet dabei, dass die erfindungsgemäße Zubereitung oder Halbfertigware deutlich weniger Natriumglutamat enthält, als in der üblichen Zubereitung bzw. Halbfertigware enthalten ist; der Natriumglutamatgehalt liegt dabei um 5 bis <100 Gew.-%, bevorzugt 10 bis 50 Gew.-%, besonders bevorzugt 20 bis 50 Gew.-% unter dem Natriumglutamatgehalt der üblichen Zubereitung bzw. Halbfertigware. Sofern neben einer oder mehreren Verbindungen der Formel (I) auch Natriumglutamat in einer hierin offenbarten Zubereitung oder Halbfertigware vorliegt, liegt das Gewichtsverhältnis der Gesamtmenge an Verbindungen der Formel (I) zu Natriumglutamat vorzugsweise im Bereich von 1:1 bis 1:200. Diese Definition gilt mutatis-mutandis auch für Zucker- bzw. Salz-reduzierte Zubereitungen.

Besonders bevorzugt sind demnach solche Natriumglutamat-reduzierten Zubereitungen oder Halbfertigwaren, wobei das Gewichtsverhältnis der Gesamtmenge an Verbindungen der Formel (I) zur Gesamtmenge an Natriumglutamat, bezogen auf die Trockenmasse der Zubereitung bzw. Halbfertigware, im Bereich von 1 : 1 bis 1 : 200 liegt. Auch hier gilt das vorangehend Gesagte analog für die Zucker- bzw. Salz-reduzierten Zubereitungen.

Im Rahmen der vorliegenden Offenbarung, sind solche Natriumglutamat-reduzierten Zubereitungen besonders bevorzugt, bei denen
- die Gesamtmenge an Natriumglutamat nicht ausreicht, um in einer Vergleichszubereitung, die keine Verbindung der Formel (I) umfasst, aber ansonsten identisch zusammengesetzt ist (normale Natriumglutamat-reduzierte Zubereitung), einen (befriedigenden) Umami-Geschmackseindruck zu vermitteln,
- und die Gesamtmenge an Verbindungen der Formel (I) ausreicht, um der Zubereitung einen (befriedigenden) Umami-Geschmackseindruck sowie optional einen (befriedigenden) Kokumi- und/oder einen (befriedigenden) salzigen Geschmackseindruck zu vermitteln.

Der Ernährung oder dem Genuss dienende erfindungsgemäße Zubereitungen und erfindungsgemäße Halbfertigwaren sind vorzugsweise ausgewählt aus der Gruppe bestehend aus
- Backwaren (z.B. Brot, Trockenkekse, Kuchen, sonstiges Gebäck),
- Getränken (z.B. Gemüsesäfte, Gemüsesaftzubereitungen),
- Instantgetränken (z.B. Instant-Gemüsegetränke),
- Fleischprodukten (z.B. Schinken, Frischwurst- oder Rohwurstzubereitungen, gewürzte oder marinierte Frisch- oder Pökelfleischprodukte),
- gewürzten oder marinierten Fischprodukten (z.B. Surimi),
- Eier oder Eiprodukten (Trockenei, Eiweiß, Eigelb),
- Getreideprodukten (z.B. vorgegarte Fertigreis-Produkte, Reismehlprodukte, Hirse- und Sorghum-Produkte, rohe oder vorgegarte Nudeln und Pastaprodukte),
- Milchprodukten (z.B. Frischkäse, Weichkäse, Hartkäse, Milchgetränke, Molke, Butter, teilweise oder ganz hydrolysierte Milchprotein-haltige Produkte),
- Produkten aus Sojaprotein oder anderen Sojabohnen-Fraktionen (z.B. Sojamilch und daraus gefertigte Produkte, Sojalecithin-haltige Zubereitungen, fermentierte Produkte wie Tofu oder Tempe oder daraus gefertigte Produkte, Sojasoßen),
- Gemüsezubereitungen (z.B. Ketchup, Soßen, Trockengemüse, Tiefkühlgemüse, vorgegarte Gemüse, in Essig eingelegte Gemüse, Gemüsekonzentrate oder -pasten, eingekochte Gemüse, Kartoffelzubereitungen),
- Knabberartikeln (z.B. gebackene oder frittierte Kartoffelchips oder Kartoffelteigprodukte, Brotteigprodukte, Extrudate auf Mais-, Reis- oder Erdnussbasis),
- Produkten auf Fett- und Ölbasis oder Emulsionen derselben (z.B. Mayonnaise, Aufstrich, Remoulade, Dressings, Würzzubereitungen),
- sonstigen Fertiggerichten und Suppen (z.B. Trockensuppen, Instant-Suppen, vorgegarte Suppen), Soßen (Instant-Soßen, Trockensoßen, Fertigsoßen),
- Gewürzen oder Gewürzzubereitungen (z.B. Senfzubereitungen, Meerrettichzubereitungen), Würzmischungen sowie insbesondere
- Aufstreuwürzungen (englisch: Seasonings), die beispielsweise im Snackbereich Anwendung finden.

Natriumglutamat-reduzierte oder -freie der Ernährung oder dem Genuss dienende erfindungsgemäße Zubereitungen und Halbfertigwaren sind vorzugsweise ausgewählt aus der Gruppe bestehend aus Backwaren (z.B. Brot, Trockenkekse, Kuchen, sonstiges Gebäck), Gemüsesaftzubereitungen, Fleischprodukte (z.B. Schinken, Frischwurst- oder Rohwurstzubereitungen, gewürzte oder marinierte Frisch- oder Pökelfleischprodukte), gewürzte oder marinierte Fischprodukte (z.B. Surimi), Eier oder Eiprodukte (Trockenei, Eiweiß, Eigelb), Getreideprodukte (z.B. vorgegarte Fertigreis-Produkte, rohe oder vorgegarte Nudeln und Pastaprodukte), Milchprodukte (z.B. Frischkäse, Weichkäse, Hartkäse, Milchgetränke, Molke, Butter, teilweise oder ganz hydrolysierte Milchprotein-haltige Produkte), Produkte aus Sojaprotein oder anderen Sojabohnen-Fraktionen (z.B. Sojamilch und daraus gefertigte Produkte, Sojalecithin-haltige Zubereitungen, fermentierte Produkte wie Tofu oder Tempe oder daraus gefertigte Produkte, Sojasoßen), Fischsoßen wie z.B. Anchovis-Soßen, Austernsoßen, Gemüsezubereitungen (z.B. Ketchup, Soßen, Trockengemüse, Tiefkühlgemüse, vorgegarte Gemüse, in Essig eingelegte Gemüse, eingekochte Gemüse, Kartoffelzubereitungen), Knabberartikel (z.B. gebackene oder frittierte Kartoffelchips oder Kartoffelteigprodukte, Brotteigprodukte, Extrudate auf Mais- oder Erdnussbasis), Produkte auf Fett- und Ölbasis oder Emulsionen derselben (z.B. Mayonnaise, Aufstrich, Remoulade, Dressings, Würzzubereitungen), Fertiggerichte, Suppen (z.B. Trockensuppen, Instant-Suppen, vorgegarte Suppen), Brühwürfel, Soßen (Instant-Soßen, Trockensoßen, Fertigsoßen), Gewürze, Würze, Würzmittel, Würzmischungen sowie insbesondere Aufstreuwürzungen (englisch: Seasonings), die beispielsweise im Snackbereich Anwendung finden.

Die erfindungsgemäßen Zubereitungen und Halbfertigwaren können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen vorliegen, z. B. als Nahrungsergänzungsmittel.

Die erfindungsgemäßen Halbfertigwaren dienen in der Regel zur Herstellung von (erfindungsgemäßen) der Ernährung oder dem Genuss dienenden gebrauchs- oder verzehrfertigen Zubereitungen.

Insbesondere können erfindungsgemäße Halbfertigwaren zur additiven Verstärkung des Umami-Geschmacks von Natriumglutamat-reduzierten Nahrungs- und Genussmitteln und auch direkt als Würzmittel für die industrielle oder nicht-industrielle Zubereitung von Nahrungs- und/oder Genussmitteln dienen.

Erfindungsgemäß besonders bevorzugt ist eine Halbfertigware (wie oben beschrieben), die bezogen auf das Gesamtgewicht der Halbfertigware eine Gesamtmenge an Natriumglutamat im Bereich von 0,00001 bis 10 Gew.-%, bevorzugt 0,0001 bis 5 Gew.-%, besonders bevorzugt von 0,001 bis 2 Gew.-%, oder kein Natriumglutamat umfasst.

Grundsätzlich enthalten erfindungsgemäß bevorzugte Zubereitungen oder Halbfertigwaren vorzugsweise:
- eine Gesamtmenge von 1 ppm bis 100.000 ppm, bevorzugt 25 ppm bis 1.000 ppm, insbesondere 5ppm bis 50 ppm an Verbindungen der Formel (I),
- oder alternativ einen Anteil von 0,0001 Gew.-% bis 90 Gew.-%, bevorzugt 0,001 Gew.-% bis 30 Gew.-% einer erfindungsgemäßen Aromazubereitung
- kein Natriumglutamat oder einen Anteil von 0,00001 bis 10 Gew.-%, bevorzugt 0,0001 bis 5 Gew.-%, insbesondere 0,001 Gew.-% bis 2 Gew.-% an Natriumglutamat,
jeweils bezogen auf das Gesamtgewicht der Zubereitungen oder der Halbfertigware.

Die hierin beschriebenen Zubereitungen oder Halbfertigwaren werden vorzugsweise hergestellt, indem die Verbindungen der Formel (I) in Ethanol und gegebenenfalls demineralisiertem und/oder gereinigtem Wasser gelöst bzw. gemischt werden. Anschließend werden die Lösungen durch einen Trocknungsprozess, vorzugsweise einen Sprühtrocknungs-, Vakuumgefriertrockungs-, Umkehrosmose-, Eindampf- oder anderen Konzentrationsprozess oder eine Kombination der genannten Prozesse, in eine (zumindest nahezu) feste Form überführt. Dabei kann die Trocknung unter Zuhilfenahme von Trägerstoffen (z.B. Stärke, Stärkederivate, Maltodextrin, Kieselgel, siehe oben) oder Hilfsstoffen (z.B. Pflanzengummen, Stabilisierungsmittel) erfolgen. Vorzugsweise erfolgt die Trocknung mittels Sprühtrocknung oder Vakuumgefriertrocknung.

Bevorzugte erfindungsgemäße Zubereitungen oder Halbfertigwaren sind Würze, Würzmischungen, Würzmittel, Brühwürfel, Instant-Suppen, Instant-Soßen, vegetarische Fertiggerichte, fleischhaltige Fertiggerichte, Fischsoßen wie z.B. Anchovis-Soßen, Austernsoßen und Sojasoßen.

Im Rahmen der vorliegenden Offenbarung werden zur Herstellung von Zubereitungen oder Halbfertigwaren Verbindungen der Formel (I) sowie gegebenenfalls andere Bestandteile zunächst in Emulsionen, in Liposomen (z.B. ausgehend von Phosphatidylcholin) in Microsphären, in Nanosphären oder auch in Kapseln, Granulate oder Extrudate aus einer für Lebens- und Genussmittel geeigneten Matrix (z.B. aus Stärke, Stärkederivaten, Cellulose oder Cellulosederivaten wie Hydroxypropylcellulose, anderen Polysacchariden wie Alginat, natürlichen Fetten, natürlichen Wachsen wie Bienenwachs oder Carnaubawachs oder aus Proteinen wie Gelatine) eingearbeitet.

In einem weiteren hierin offenbarten Herstellungsverfahren werden Verbindungen der Formel (I) mit einem oder mehreren geeigneten Komplexbildnern, beispielsweise mit Cyclodextrinen oder Cyclodextrinderivaten, bevorzugt alpha- oder beta-Cyclodextrin, komplexiert und in dieser komplexierten Form eingesetzt.

Besonders bevorzugt sind Zubereitungen oder Halbfertigwaren, bei denen die Matrix so gewählt ist, dass die Verbindungen der Formel (I) verzögert von der Matrix freigegeben werden, so dass man eine langanhaltende Wirkung erhält. Als Matrix können hier z.B. natürliche Fette, natürliche Wachse (z.B. Bienenwachs, Carnaubawachs) oder auch natürliche Ballaststoffe (Weizenfasern, Apfelfasern, Haferfasern, Orangenfasern) verwendet werden.

Im Zusammenhang mit der vorliegenden Offenbarung wird auch ein Verfahren zum Vermitteln, Modifizieren und/oder Verstärken eines Umami-, Kokumi- und/oder salzigen Geschmacks einer der Ernährung oder dem Genuss dienenden gebrauchs- oder verzehrfertigen Zubereitung oder Halbfertigware beschrieben. Ein solches Verfahren umfasst den Schritt
(a) Vermischen einer Umami-geschmacklich wirksamen Menge (für bevorzugte Mengen s. oben), einer oder mehrerer Verbindungen der Formel (I) oder einer Geschmacksstoffmischung (wie oben beschrieben) oder eines pflanzlichen Extrakts (wie oben beschrieben) mit einem oder mehreren weiteren Bestandteilen der Zubereitung bzw. Halbfertigware, oder
(b) Applizieren einer Umami-geschmacklich wirksamen Menge einer oder mehrerer Verbindungen der Formel (I) oder einer Aromamischung auf einen oder mehrere weitere Bestandteile der Zubereitung bzw. Halbfertigware, oder
(c) Einbetten einer geschmacklich wirksamen Menge einer oder mehrerer Verbindungen der Formel (I) oder einer Aromamischung in ein Hüll- oder Matrixmaterial.

### Beispiele

Die folgenden Anwendungsbeispiele dienen zur Verdeutlichung der Erfindung, ohne diese damit einzuschränken.

### Herstellbeispiel 1

### Sprühgetrocknete Zusammensetzung

10 g eines Zimtsäureamid-Derivats der folgenden Formel (II) 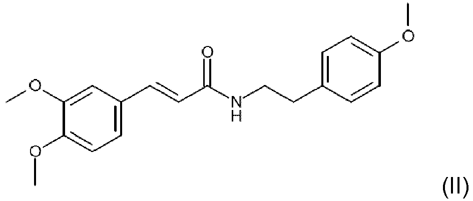 wurden mit 90 g Maltodextrin vermischt, in 250 ml wässrigem Ethanol gelöst und dann sprühgetrocknet. Das resultierende Pulver wurde in den nachfolgend beschriebenen Anwendungsbeispielen eingesetzt. Dazu wurde des Weiteren eine (nicht erfindungsgemäße) Aromakomposition mitverwendet, die 0,025 g trans-Pellitorin, 2.5 g Hesperitin, 1,5 g Phloretin und ad 100 g 1,2-Propylenglykol enthielt.

### Herstellbeispiel 1

### Würzmittel

**Tabelle 1**

| Zusammensetzung (alle Mengenangaben als g) | | | |
|---|---|---|---|
| **Teil** | **Bestandteil** | **I** | **II** |
| | | **(Vergleichs-beispiel)** | |
| A | Zimtsäureamid nach Formel (II) | 0,2 | 0,1 |
| | Rubemamin/Rubescenamin (1:1) | | 0,1 |
| | Natriumchlorid | 15 | 15 |
| B | Senfsamenmehl | 5 | 5 |
| | Senfaroma | 0,1 | 0,1 |

**Herstellung:** Teil A wurde eingewogen. Es wurden 290 ml Wasser vorgelegt, unter Rühren Teil A zugegeben und gelöst. Die Lösung wurde mit Wasser auf 1,84 kg verdünnt (pH 6,0) und anschließend gefriergetrocknet (Eutektischer Punkt: -15°C; Arbeitsvakuum: 0,52 mbar; Stellflächentemperatur: -5°C bis +25°C). Das Produkt wurde dann mit Senfsamenmehl und dem Senfaroma aus Teil B gemischt und zu einem Würzmittel konfektioniert.

### Vergleichsbeispiel 2

### Reaktionsaroma

**Tabelle 2**

| Zusammensetzung (alle Mengenangaben in g) | | | | |
|---|---|---|---|---|
| **Inhaltsstoff** | **Einsatz [g]** | | | |
| | **2A** | **2B** | **2C** | **2D** |
| L-Alanin | 41,0 | 41,0 | 41,0 | 41,0 |
| L-Asparaginsäure | 123,0 | 123,0 | 123,0 | 123,0 |
| Bernsteinsäure | 4,7 | 4,7 | 4,7 | 4,7 |
| Calciumchlorid Dihydrat | 7,0 | 7,0 | 7,0 | 7,0 |
| L-Cystein·HCl Monohydrat | 11,0 | 11,0 | 11,0 | 11,0 |
| Dikaliumphosphat | 6,0 | 6,0 | 6,0 | 6,0 |
| Fructose gemahlen | 1,0 | 1,0 | 1,0 | 1,0 |
| L-Isoleucin | 1,6 | 1,6 | 1,6 | 1,6 |
| Kaliumchlorid | 228,0 | 228,0 | 228,0 | 228,0 |
| L-Leucin | 1,6 | 1,6 | 1,6 | 1,6 |
| L-Lysin·HCl | 3,6 | 3,6 | 3,6 | 3,6 |
| Magnesiumchlorid Hexahydrat | 19,0 | 19,0 | 19,0 | 19,0 |
| Maltodextrin | 49,0 | 49,0 | 49,0 | 49,0 |
| L-Phenylalanin | 2,0 | 2,0 | 2,0 | 2,0 |
| L-Prolin | 74,0 | 74,0 | 74,0 | 74,0 |
| L-Serin | 6,5 | 6,5 | 6,5 | 6,5 |
| L-Threonin | 3,0 | 3,0 | 3,0 | 3,0 |
| L-Valin | 9,0 | 9,0 | 9,0 | 9,0 |
| Zimtsäureamid-Derivat nach Formel (II) | 25,0 | 20,0 | 15,0 | 10,0 |

| **Inhaltsstoff** | **Einsatz [g]** | | | |
|---|---|---|---|---|
| Wasser | Ad 100 | | | |

**Herstellung**: Alle Komponenten werden bei 40°C gemischt und anschließend bei 85°C für 10 Minuten erhitzt (Rückflussreaktion). Nach dem Abkühlen auf 40°C wird mit Kalilauge auf pH 5 eingestellt.

### Vergleichsbeispiel 3

### Instantsuppe, Typ Lauch-Creme

Formulierung A dient zum Vergleich, die Formulierungen 3A, 3B und 3C sind Natriumglutamat-frei, die Formulierung 3D ist Natriumglutamat-frei und salzreduziert.

**Tabelle 3**

| Zusammensetzung (alle Mengenangaben in g) | | | | | |
|---|---|---|---|---|---|
| **Bestandteil** | **A** | **3A** | **3B** | **3C** | **3D** |
| Kartoffelstärke | 20,0 | 20,0 | 20,0 | 20,0 | 20,0 |
| Fettpulver | 25,0 | 25,0 | 25,0 | 25,0 | 25,0 |
| Lactose | 20,0 | 20,0 | 20,0 | 20,0 | 20,0 |
| Maltodextrin | 11,730 | 14,714 | 14,710 | 14,680 | 15,705 |
| Kochsalz | 8,0 | 8,0 | 8,0 | 8,0 | 7,0 |
| Natriumglutamat | 3,0 | - | - | - | - |
| Spinatpulver | 2,0 | 2,0 | 2,0 | 2,0 | 2,0 |
| Grünes Lauchpulver | 2,0 | 2,0 | 2,0 | 2,0 | 2,0 |
| Zitronensäure, als Pulver | 0,3 | 0,3 | 0,3 | 0,3 | 0,3 |
| Gehärtetes Pflanzenfett | 3,0 | 3,0 | 3,0 | 3,0 | 3,0 |
| Gefriergetrockneter Lauch | 1,0 | 1,0 | 1,0 | 1,0 | 1,0 |
| Huhn-Aroma | 1,0 | 1,0 | 1,0 | 1,0 | 1,0 |
| Würze Typ "grüner Lauch", Pulver | 2,0 | 2,0 | 2,0 | 2,0 | 2,0 |
| Würze, Typ "gekochte Zwiebel" | 0,6 | 0,6 | 0,6 | 0,6 | 0,6 |
| Hefewürze, Typ "Gemüsebrühe" | 0,3 | 0,3 | 0,3 | 0,3 | 0,3 |
| Curcuma-Extrakt | 0,07 | 0,07 | 0,09 | 0,07 | 0,07 |
| Zimtsäureamid-Derivat Formel (II) | - | 0,0025 | 0,0015 | 0,050 | 0,015 |

**Herstellung**: 5 g der jeweiligen Pulvermischung werden mit je 100 ml heißem Wasser aufgegossen, um eine verzehrfertige Suppe zu erhalten.

### Vergleichsbeispiel 4

### Instantsuppe, Typ Hühnersuppe mit Nudeln

Formulierung A dient zum Vergleich, die Formulierungen 4A, 4B und 4C sind Natriumglutamat-frei, die Formulierung 4D ist Natriumglutamat-frei und salzreduziert.

**Tabelle 4**

| Zusammensetzung (alle Mengenangaben als g) | | | | | |
|---|---|---|---|---|---|
| **Bestandteil** | **A** | **4A** | **4B** | **4C** | **4D** |
| Stärke | 16,0 | 16,0 | 16,0 | 16,0 | 16,0 |
| Kochsalz | 7 | 7 | 7 | 7 | 5 |
| Saccharose, raffiniert | 3,2 | 3,2 | 3,2 | 3,2 | 3,2 |
| Natriumglutamat | 3,2 | - | - | - | - |
| Natriuminosinat / Natriumguanylat im Verhältnis 1:1 | 0,8 | 0,8 | 0,8 | 0,8 | 0,8 |
| Säurehydrolysiertes Pflanzen-protein | 8,0 | 8,0 | 8,0 | 8,0 | 8,0 |
| Fettpulver | 2,0 | 2,0 | 2,0 | 2,0 | 2,0 |
| Gemüsefett, sprühgetrocknet | 1,0 | 1,0 | 1,0 | 1,0 | 1,0 |
| Gefriergetrocknetes Hühnerfleisch, in Stückchen | 2,0 | 2,0 | 2,0 | 2,0 | 2,0 |
| Suppen-Nudeln | 32,0 | 32,0 | 32,0 | 32,0 | 32,0 |
| Maltodextrin | 12,160 | 15,339 | 14,135 | 14,110 | 15,144 |
| Chinesisches Gemüse, gefriergetrocknet | 4,6 | 4,6 | 4,6 | 4,6 | 4,6 |
| Huhn-Aroma | 8,0 | 8,0 | 8,0 | 8,0 | 8,0 |
| Lebensmittelfarbstoff Riboflavin | 0.04 | 0.04 | 0.04 | 0.04 | 0.04 |
| Zimtsäureamid-Derivat nach Formel II | - | 0,0025 | 0,025 | 0,05 | 0,015 |
| Aromenkomposition nach Herstellbeispiel 1-I | - | - | 1,2 | 1,2 | 1,2 |

**Herstellung**: 4,6 g der jeweiligen Pulvermischung werden 10 Minuten in je 100 ml Wasser gekocht, um eine verzehrfertige Suppe zu erhalten.

### Vergleichsbeispiel 5

### Würzmischung, Typ Pfeffer

Formulierung A dient zum Vergleich, die Formulierungen 5A, 5B und 5C sind Natriumglutamat-frei, die Formulierung 5D ist Natriumglutamat-frei und salzreduziert.

**Tabelle 5**

| Zusammensetzung (alle Mengenangaben als g) | | | | | |
|---|---|---|---|---|---|
| **Bestandteil** | **A** | **5A** | **5B** | **5C** | **%d** |
| Milchprotein | 0,8 | 0,8 | 0,8 | 0,8 | 0,8 |
| Johannisbrotkernmehl | 2,0 | 2,0 | 2,0 | 2,0 | 2,0 |
| Maisstärke | 21,997 | 27,995 | 27,865 | 27,340 | 29,900 |
| Kochsalz | 14,0 | 14,0 | 14,0 | 14,0 | 12,0 |
| Paprikapulver | 13,0 | 13,0 | 13,0 | 13,0 | 13,0 |
| Tomatenpulver | 13,0 | 13,0 | 13,0 | 13,0 | 13,0 |
| Saccharose | 4,0 | 4,0 | 4,0 | 4,0 | 4,0 |
| Knoblauchpulver | 0,5 | 0,5 | 0,5 | 0,5 | 0,5 |
| Gehärtetes Pflanzenfett | 8,0 | 8,0 | 8,0 | 8,0 | 8,0 |
| Fettpulver | 11,0 | 11,0 | 11,0 | 11,0 | 11,0 |
| Natriumglutamat | 6,0 | - | - | - | - |
| Lebensmittelfarbstoff Rote Bete und Paprika | 2,0 | 2,0 | 2,0 | 2,0 | 2,0 |
| Aroma Typ "Pfeffer" | 2,0 | 2,0 | 2,0 | 2,0 | 2,0 |
| Aroma Typ "Pizza" | 1,2 | 1,2 | 1,2 | 1,2 | 1,2 |
| Aroma Typ "Tomate" | 0,4 | 0,4 | 0,4 | 0,4 | 0,4 |
| Extrakt aus schwarzem Pfeffer | 0,1 | 0,1 | 0,1 | 0,1 | 0,1 |
| Zimtsäureamid-Derivat nach Formel II | 0,003 | 0,005 | 0,1 | 0,060 | 0,10 |

**Herstellung:** Jeweils 100 g Nackensteak vom Schwein werden mit jeweils 1,7 g der Zubereitungen A, B, C und D gleichmäßig bestreut und gebraten.

### Anwendungsbeispiel 6

### Tomatenketchup

Die Formulierungen A und B dienen zum Vergleich, die Formulierungen 6A (Natriumglutamat-frei, Zucker-reduziert) und 6B (Salz- und Zucker-reduziert; Natriumglutamat-frei) sind erfindungsgemäß.

**Tabelle 6**

| Zusammensetzung (alle Mengenangaben als g) | | | | |
|---|---|---|---|---|
| **Bestandteil** | **A** | **B** | **6A** | **6B** |
| Natriumglutamat | 0,40 g | - | - | - |
| Kochsalz | 2 g | 1 g | 2 g | 1 g |
| Stärke, Farinex WM 55 | 1 g | 1 g | 1 g | 1 g |
| Sucrose | 12 g | 9,2 g | 9,2 g | 9,2 g |
| Tomaten-Konzentrat 2-fach | 40 g | 40 g | 40 g | 40 g |
| Glucosesirup 80 Brix | 18 g | 18 g | 18 g | 18 g |
| Branntweinessig 10% | 7 g | 7 g | 7 g | 7 g |
| Wasser | 19,60 g | 23,80 g | 22,30 g | 23.25 g |
| Aromenkomposition nach Herstellbeispiel 1-II | - | - | 0,4 g | 0.4 g |
| 5 %ige Lösung des Zimtsäureamid-Derivats nach Formel II in Propylenglycol | - | - | 0,10 g | 0,15 g |

**Herstellung**: Die Inhaltsstoffe werden in der angegebenen Reihenfolge gemischt und das fertige Ketchup mit Hilfe eines Rührwerkes homogenisiert, in Flaschen abgefüllt und sterilisiert.

### Vergleichsbeispiel 7

### Bouillon

Die Formulierungen A, B, 7A , 7B (Natriumglutamat-frei) und 7C (Salz-reduziert; Natriumglutamat-frei) dienen zum Vergleich.

**Tabelle 7**

| Zusammensetzung (alle Mengenangaben als g) | | | | | |
|---|---|---|---|---|---|
| **Bestandteil** | **A** | **B** | **7A** | **7B** | **7C** |
| Fettpulver | 8,77 | 8,77 | 8,77 | 8,77 | 8,77 |
| Natriumglutamat | 8,77 | 5 | 5 | - | - |
| Hefeextrakt Pulver | 12,28 | 12,28 | 12,28 | 12,28 | 12,28 |
| Kochsalz | 29,83 | 29,83 | 29,83 | 29,83 | 26,83 |
| Maltodextrin | 37,28 | 41,050 | 41,040 | 45,090 | 48,950 |
| Natürlicher Gemüseextrakt | 3,07 | 3,07 | 3,07 | 3,07 | 3,07 |
| Zimtsäureamid-Derivat nach Formel II | - | - | 0,010 | 0,030 | 0,100 |

**Herstellung**: 15 g der jeweiligen Pulvermischung werden mit je 1000 ml heißem Wasser aufgegossen.

### Vergleichsbeispiel 8

### Würzmischung für Kartoffelchips

Die Formulierungen A, B, 8A (Natriumglutamat-reduziert), 8B (Natriumglutamat-frei) und 8C (Salz-reduziert; Natriumglutamat-frei) dienen zum Vergleich.

**Tabelle 8**

| Zusammensetzung (alle Mengenangaben als g) | | | | | |
|---|---|---|---|---|---|
| **Bestandteil** | **A** | **B** | **8A** | **8B** | **8C** |
| Natriumglutamat | 3,50 | 2,00 | 2,00 | - | 1,00 |
| Käsepulver | 10,00 | 10,00 | 10,00 | 10,00 | 10,00 |
| Knoblauchpulver | 2,00 | 2,00 | 2,00 | 2,00 | 2,00 |
| Molkenpulver | 38,86 | 40,36 | 40,06 | 41,91 | 44,76 |
| Würzextraktöl | 0,20 | 0,20 | 0,20 | 0,20 | 0,20 |
| Paprikapulver | 9,80 | 9,80 | 9,80 | 9,80 | 9,80 |
| Kochsalz | 21,00 | 21,00 | 21,00 | 21,00 | 17,00 |
| Tomatenpulver | 9,00 | 9,00 | 9,00 | 9,00 | 9,00 |
| Trockenaroma | 2,50 | 2,50 | 2,50 | 2,50 | 2,50 |
| Siliciumdioxid | 0,02 | 0,02 | 0,02 | 0,02 | 0,02 |
| Pflanzenöl | 0,02 | 0,02 | 0,02 | 0,02 | 0,02 |
| Zwiebelpulver | 3,00 | 3,00 | 3,00 | 3,00 | 3,00 |
| Sahne Aromakonzentrat | 0,03 | 0,03 | 0,03 | 0,03 | 0,03 |
| Käse Aroma | 0,03 | 0,03 | 0,03 | 0,03 | 0,03 |
| Tomaten Aromakonzentrat | 0,04 | 0,04 | 0,04 | 0,04 | 0,04 |
| Sprühgetrocknete Zusammensetzung gemäß Herstellbeispiel 1-I | - | - | 0,30 | 0,45 | 0,60 |

**Herstellung:** 6 g der Würzmischung werden auf 94 g Kartoffelchips aufgezogen.

### Anwendungsbeispiel 9

### Weiße Sauce

Die Formulierungen A und B dienen zum Vergleich, die Formulierungen 9A (Natriumglutamat-reduziert), 9B (Natriumglutamat-frei) und 9C (Salz-reduziert; Natriumglutamat-frei) sind erfindungsgemäß.

**Tabelle 9**

| Zusammensetzung (alle Mengenangaben als g) | | | | | |
|---|---|---|---|---|---|
| **Bestandteil** | **A** | **B** | **9A** | **9B** | **9C** |
| Maltodextrin | 25,98 | 27,18 | 27,08 | 27,58 | 28,43 |
| Kochsalz | 7,50 | 7,50 | 7,50 | 7,50 | 6,00 |
| Natriumglutamat | 2,00 | 0,80 | 0,80 | - | 0,80 |
| Pflanzenfett | 5,00 | 5,00 | 5,00 | 5,00 | 5,00 |
| Pfeffer, weiß | 0,02 | 0,02 | 0,02 | 0,02 | 0,02 |
| Zwiebelpulver | 1,50 | 1,50 | 1,50 | 1,50 | 1,50 |
| vorverkleisterte Maisstärke | 30,00 | 30,00 | 30,00 | 30,00 | 30,00 |
| Fettpulver | 28,00 | 28,00 | 28,00 | 28,00 | 28,00 |
| Sprühgetrocknete Zusammensetzung gemäß Herstellbeispiel 1-II | - | - | 0,10 | 0.40 | 0,25 |

**Herstellung:** 90 g der Soßenmischung werden mit 1000 ml heißem Wasser aufgegossen und mit dem Schneebesen kräftig verrührt.

### Vergleichsbeispiel 10

### Braune Sauce

Die Formulierungen A, B, 10A (Natriumglutamat-reduziert), 10B (Natriumglutamat-frei) und 10C (Salz-reduziert; Natriumglutamat-frei) dienen zum Vergleich.

**Tabelle 10**

| Zusammensetzung (alle Mengenangaben als g) | | | | | |
|---|---|---|---|---|---|
| **Bestandteil** | **A** | **B** | **10A** | **10B** | **10C** |
| Stärke | 40,00 | 40,00 | 40,00 | 40,00 | 40,00 |
| Maltodextrin | 33,10 | 33,80 | 33,66 | 34,70 | 35,07 |
| Kochsalz | 6,00 | 6,00 | 6,00 | 6,00 | 4,50 |
| Zuckerkulör, sprühgetrocknet | 5,00 | 5,00 | 5,00 | 5,00 | 5,00 |
| Hefeextraktpulver | 3,00 | 3,00 | 3,00 | 3,00 | 3,00 |
| Natriumglutamat | 2,00 | 1,30 | 1,30 | - | 1,30 |
| Zucker | 0,50 | 0,50 | 0,50 | 0,50 | 0,50 |
| Fettpulver | 5,00 | 5,00 | 5,00 | 5,00 | 5,00 |
| Tomatenpulver | 3,00 | 3,00 | 3,00 | 3,00 | 3,00 |
| Natürlicher Gemüseextrakt | 1,00 | 1,00 | 1,00 | 1,00 | 1,00 |
| Zwiebelextrakt | 0,30 | 0,30 | 0,30 | 0,30 | 0,30 |
| Pfefferextrakt | 0,10 | 0,10 | 0,10 | 0,10 | 0,10 |
| Trockenaroma | 1,00 | 1,00 | 1,00 | 1,00 | 1,00 |
| Sprühgetrocknete Zusammensetzung gemäß Herstellbeispiel 1-I | - | - | 0,70 | 2,00 | 0,70 |

**Herstellung**: 90 g der Soßenmischung werden mit 1000 ml heißem Wasser aufgegossen und mit dem Schneebesen kräftig verrührt.

### Anwendungsbeispiel 11

### Tomatensuppe

Die Formulierungen A und B dienen zum Vergleich, die Formulierungen 11A (Natriumglutamat-reduziert), 11 B (Natriumglutamat-frei) und 11C (Salz-reduziert; Natriumglutamat-frei) sind erfindungsgemäß.

**Tabelle 11**

| Zusammensetzung (alle Mengenangaben als g) | | | | | |
|---|---|---|---|---|---|
| **Bestandteil** | **A** | **B** | **C** | **D** | **E** |
| Wasser | 50,65 | 50,80 | 50,799 | 51,035 | 51,29 |
| Pflanzenöl | 5,50 | 5,50 | 5,50 | 5,50 | 5,50 |
| Tomatenpaste | 24,00 | 24,00 | 24,00 | 24,00 | 24,00 |
| Sahne | 1,05 | 1,05 | 1,05 | 1,05 | 1,05 |
| Zucker | 2,00 | 2,00 | 2,00 | 2,00 | 2,00 |
| Kochsalz | 1,70 | 1,70 | 1,70 | 1,70 | 1,20 |
| Natriumglutamat | 0,40 | 0,25 | 0,25 | - | 0,25 |
| Weizenmehl | 5,50 | 5,50 | 5,50 | 5,50 | 5,50 |
| Stärke | 1,20 | 1,20 | 1,20 | 1,20 | 1,20 |
| gewürfelte Tomaten | 8,00 | 8,00 | 8,00 | 8,00 | 8,00 |
| Sprühgetrocknete Zusammensetzung gemäß Herstellbeispiel 1-II | - | - | 0,001 | 0,015 | 0,010 |

**Herstellung**: Die festen Bestandteile werden eingewogen, gemischt und dem Wasser hinzugefügt. Das Pflanzenöl wird zudosiert und die Tomatenpaste hinzugegeben. Die Mischung wird unter Rühren aufgekocht.

### Vergleichsbeispiel 12

### Anwendung in einem Grünteegetränk

**Tabelle 12**

| Zusammensetzung (alle Mengenangaben als Gew.-%) | | |
|---|---|---|
| **Inhaltsstoff** | **11A** | **11B** |
| Grünteekonzentrat | 18.00 | 18.00 |
| 5% ige Lösung Zimtsäureamid-Derivat der Formel (II) | 0.002 | 0.004 |
| entmineralisiertes Wasser | 81.998 | 81.996 |

**Herstellung**: Das Grünteekonzentrat wird mit der jeweiligen 5 %igen Lösung des Zimtsäureamid-Derivats der Formel (II) in Propylenglycol vermischt. Anschließend wird mit entmineralisiertem Wasser aufgefüllt und erneut gründlich durchmischt. Dann wird das Produkt gefiltert, verbrauchsfertig verpackt und bei 118°C sterilisiert.

### Vergleichsbeispiel 13

### Rindfleischwürzmischung für (Fertig-Nudeln)

**Tabelle 13**

| Zusammensetzung (alle Mengenangaben als Gew.-%) | |
|---|---|
| **Inhaltsstoff** | **12** |
| Rindsfettaroma | 5,00 |
| Zuckercouleur | 3.00 |
| Zitronensäure (wasserfrei) | 0.40 |
| Schnittlauch (entwässert) | 2.00 |
| Maltodextrin (ex Tapioka) | 10.30 |
| Mononatriumglutamat | 15.00 |
| Zwiebelpulver | 5.00 |
| Ribotide | 0.80 |
| Natriumchlorid | 45.65 |
| Zucker | 2.80 |
| Süßmolkepulver | 6.50 |
| 10 %ige Lösung des Zimtsäureamid-Derivats nach Formel II in Propylenglykol | 0.05 |

**Herstellung**: Alle Inhaltsstoffe werden vermischt, bis sich eine homogene Mischung ergibt.

### Vergleichsbeispiel 14

### Nudeln

**Tabelle 14**

| Zusammensetzung (alle Mengenangaben als Gew.-%) | | |
|---|---|---|
| **Teil** | **Inhaltsstoff** | **13** |
| A | Weizenmehl | 62.00 |
| | Kartoffelstärke | 10.90 |
| B | Salz | 1.10 |
| | Guarkernmehl | 0.06 |
| | Natriumcarbonat | 0.07 |
| | Kaliumcarbonat | 0.25 |
| | Na₂H₂P₂O₇ | 0.07 |
| | 10 %ige Lösung des Zimtsäureamid-Derivats nach Formel II in Propylenglykol | 0.05 |
| C | Wasser | 25.45 |

**Herstellung:** Eine Suspension der Zutaten B in Wasser wird zu einer Mischung der Zutaten A gegeben und zu einem Teig geknetet. Nachdem der Teig für ca. 5 Minuten geruht hat, wird dieser mit Hilfe einer Nudelmaschine zu Platten verarbeitet, die in einem letzten Arbeitsschritt in eine übliche Form zurechtgeschnitten werden. Die Nudeln sind nach einer Kochzeit von 3 Minuten verzehrfertig und können z. B. mit 8 g der Rindfleischwürzmischung (Vergleichsbeispiel 13) angerichtet werden.

## Patentansprüche

1. Verwendung einer Kombination (a1) eines Stoffes der Formel (I) 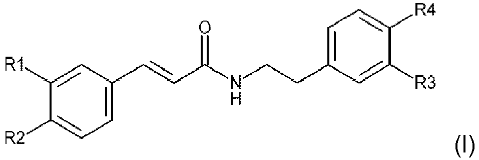 bei dem R¹, R² und R⁴ für eine Methoxygruppe und R³ für Wasserstoff steht, mit (b1) Rubemamin oder (b2) Rubescenamin oder deren Mischung, wobei das Einsatzverhältnis der Stoffe a1:(b1+b2) etwa 10:90 bis etwa 90:10, vorzugsweise etwa 25:75 bis etwa 75:25 und insbesondere etwa 40:60 bis etwa 60:40 betragen kann, als Geschmacksstoff.

2. Aromazubereitung, enthaltend
(a) eine Kombination wie in Anspruch 1 definiert und
(b) mindestens einen weiteren Geschmacksstoff.

3. Zubereitungen nach Anspruch 2, **dadurch gekennzeichnet, dass** auch die Komponente (b) für sich genommen mindestens einen der Geschmackseindrücke Umami, Kokumi oder salzig vermittelt oder den Geschmackseindruck "süß" verstärken.

4. Zubereitungen nach den Ansprüchen 2 und/oder 3, **dadurch gekennzeichnet, dass** sie als Komponente (b) mindestens einen weiteren Geschmacksstoff enthalten, der ausgewählt ist aus der Gruppe, die gebildet wird von Mononatriumglutamat, freier Glutaminsäure, Nucleotiden oder deren pharmazeutisch akzeptablen Salzen, Strombinen, Theogallinen, Pyridin-Betain-Verbindungen, Glutaminsäureglycosiden, Äpfelsäureglycosiden, Glutathion-Derivaten, Lactisolen und Alkylpyridinen, Hesperetin, 3,7'-Dihydroxy-4'-methoxyflavan, Phloretin sowie deren Gemischen.

5. Zubereitungen zur oralen Aufnahme, enthaltend
(a) eine Kombination wie in Anspruch 1 definiert und
(b) mindestens einen weiteren zum Verzehr geeigneten Bestandteil ausgewählt aus der Gruppe die gebildet wird von Trägerstoffen, Aromastoffen, Fetten und Ölen, Emulgatoren und Antioxidantien.

6. Zubereitungen nach Anspruch 5, **dadurch gekennzeichnet, dass** es sich um der Ernährung oder dem Genuss dienende gebrauchs- oder verzehrfertige Zubereitungen oder entsprechende Halbfertigprodukte handelt.

7. Zubereitungen nach den Ansprüchen 5 und/oder 6, **dadurch gekennzeichnet, dass** diese ausgewählt sind aus der Gruppe, die gebildet wird von Backwaren, Getränken, Instantgetränken, Fleischprodukten, gewürzten oder marinierten Fischprodukten, Eiern oder Eiprodukten, Getreideprodukten, Milchprodukten, Produkten aus Sojaprotein oder anderen Sojabohnen-Fraktionen, Gemüsezubereitungen, Knabberartikeln, Produkten auf Fettund Ölbasis oder Emulsionen derselben, sonstigen Fertiggerichten, Suppen, Soßen, Gewürzen oder Gewürzzubereitungen sowie Aufstreuwürzungen.

8. Zubereitungen nach mindestens einem der Ansprüche 5 bis 7, **dadurch gekennzeichnet, dass** sie entweder einen reduzierten Gehalt an Natriumglutamat aufweisen oder völlig frei davon sind.

9. Zubereitungen nach mindestens einem der Ansprüche 5 bis 8, **dadurch gekennzeichnet, dass** sie einen reduzierten Gehalt an Zucker und/oder Salz aufweisen.

## Claims

1. Use of a combination (a1) of the compound of formula (I) 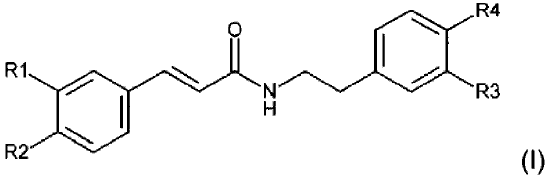 in which R¹, R² and R⁴ denote a methoxy group and R³ denotes hydrogen, with (b1) rubemamine or (b2) rubescenamine or their mixture, wherein the use ratio of the compounds a1:(b1+b2) can be about 10:90 to about 90:10, preferably about 25:75 to about 75:25 and particularly about 40:60 to about 60:40, as flavouring.

2. Flavouring preparation comprising
(a) a combination as defined in claim 1 and
(b) at least one further flavouring.

3. Preparations according to claim 2, **characterised in that** also component (b) by itself conveys at least one of the taste impressions umami, kokumi or salty or enhances the taste impression "sweet".

4. Preparations according to claim 2 and/or 3, **characterised in that** they contain as component (b) at least one further flavouring that is selected from the group consisting of monosodium glutamate, free glutamic acid, nucleotides or their pharmaceutically acceptable salts, strombines, theogallins, pyridine-betain-compounds, glutamic acid glycosides, malic acid glycosides, glutathione derivatives, lactisoles and alkylpyridines, hesperetin, 3,7'-dihydroxy-4'-methoxyflavan, phloretin as well as their mixtures.

5. Preparations for oral intake comprising
(a) a combination as defined in claim 1 and
(b) at least one further component suitable for consumption selected from the group consisting of carrier agents, flavouring agents, fats and oils, emulsifyers and antioxidants.

6. Preparations according to claim 5, **characterised in that** they are preparations serving nutrition or pleasure that are ready to use or ready to consume or corresponding semi-finished products.

7. Preparations according to claim 5 and/or 6, **characterised in that** these are selected from the group consisting of baked goods, beverages, instant beverages, meat products, spiced or marinated fish products, eggs or egg products, cereal products, milk products, products of soy protein or other soybean fractions, vegetable preparations, snacks, products on fat and oil basis or emulsions thereof, other instant meals, soups, sauces, spices or spice preparations as well as seasonings.

8. Preparations according to at least one of the claims 5 to 7, **characterised in that** they either have a reduced sodium glutamate content or are completely free thereof.

9. Preparations according to at least one of the claims 5 to 8, **characterised in that** they have a reduced sugar and/or salt content.

## Revendications

1. Utilisation d'une combinaison (a1) d'une substance de formule (I) 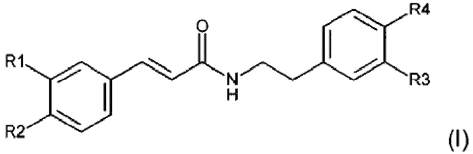 dans laquelle R¹ R² et R⁴ représentent un groupe méthoxy et R³ représente de l'hydrogène, avec (b1) la rubémamine ou (b2) la rubescenamine ou leurs mélanges, le rapport d'emploi des substances a1 : (b1 + b2) pouvant être compris entre 10 : 90 à peu près et 90 : 10 à peu près, de préférence entre 25 : 75 à peu près et 75 : 25 à peu près et en particulier entre 40 : 60 à peu près et 60 : 40 à peu près, en tant que substance aromatisante.

2. Préparation aromatisante contenant
(a) une combinaison telle que définie dans la revendication 1 et
(b) au moins une autre substance aromatisante.

3. Préparations selon la revendication 2, **caractérisées par le fait que** le composant (b) confère lui aussi, pris séparément, au moins l'une des impressions gustatives umami, kokumi ou salée ou intensifie l'impression gustative "douce".

4. Préparations selon les revendications 2 et/ou 3, **caractérisées par le fait qu'**elles contiennent en tant que composant (b) au moins une autre substance aromatisante qui est choisie dans le groupe qui est constitué par le glutamate monosodique, l'acide glutamique libre, les nucléotides ou leurs sels pharmaceutiquement acceptables, les strombines, les théogallines, les composés de pyridine-bétaïne, les glycosides de l'acide glutamique, les glycosides de l'acide malique, les dérivés de glutathion, les lactisoles et les alkylpyridines, l'hespérétine, le 3,7'-dihydroxy-4'-méthoxyflavane, la phlorétine ainsi que leurs mélanges.

5. Préparations destinées à être consommées oralement, contenant
(a) une combinaison telle que définie dans la revendication 1 et
(b) au moins un autre composant approprié à la consommation qui est choisi dans le groupe constitué par les supports, les aromatisants, les graisses et les huiles, les émulsifiants et les antioxydants.

6. Préparations selon la revendication 5, **caractérisées par le fait qu'**il s'agit de préparations prêtes à être utilisées ou consommées qui servent à l'alimentation ou à la consommation de luxe, ou de produits semi-finis correspondants.

7. Préparations selon les revendications 5 et/ou 6, **caractérisées par le fait que** celles-ci sont choisies dans le groupe qui est constitué par les produits de boulangerie, les boissons, les boissons instantanées, les produits à base de viande, les produits de poissons épicés ou marinés, les oeufs ou les produits aux oeufs, les produits céréaliers, les produits laitiers, les produits faits à partir de protéine de soja ou d'autres fractions de la fève de soja, les préparations de légume, les grignotines, les produits à base de graisse et d'huile ou leurs émulsions, d'autres plats cuisinés, les soupes, les sauces, les épices ou les préparations d'épices ainsi que les condiments en poudre.

8. Préparations selon l'une au moins des revendications 5 à 7, **caractérisées par le fait que** soit elles présentent une teneur réduite en glutamate de sodium soit elles sont complètement dépourvues de celui-ci.

9. Préparations selon l'une au moins des revendications 5 à 8, **caractérisées par le fait qu'**elles présentent une teneur réduite en sucre et/ou en sel.
